**Europäisches Patentamt**

(19) **European Patent Office**

**Office européen des brevets**

(11) Numéro de publication: **0 018 271**
**B1**

(12) **FASCICULE DE BREVET EUROPEEN**

(45) Date de publication du fascicule du brevet: **06.07.83**

(51) Int. Cl.³: **F 24 J 3/02, F 28 D 15/00**

(21) Numéro de dépôt: **80400473.7**

(22) Date de dépôt: **09.04.80**

(54) Capteur solaire, du genre caloduc, protégé contre les surpressions.

(30) Priorité: **13.04.79 FR 7909409**

(43) Date de publication de la demande:
**29.10.80 Bulletin 80/22**

(45) Mention de la délivrance du brevet:
**06.07.83 Bulletin 83/27**

(84) Etats contractants désignés:
**DE GB IT**

(56) Documents cités:
**DE - A - 2 330 723**
**DE - A - 2 365 714**
**DE - A - 2 702 585**
**FR - A - 2 255 566**
**FR - A - 2 275 739**
**FR - A - 2 298 068**
**FR - A - 2 357 840**
**GB - A - 1 542 277**
**US - A - 3 414 050**
**US - A - 3 519 067**
**US - A - 3 700 028**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Devin, Bernard**
**2, rue des Grès**
**F-91190 Gif-Sur-Yvette (FR)**
Inventeur: **Durand, Jean-Paul**
**F-77570 Fontaine par Chateau Landon (FR)**
Inventeur: **Guillemot, Michel**
**33B, Boulevard de Chevre Morte**
**F-21240 Talant (FR)**

(74) Mandataire: **Mongrédien, André et al,**
**c/o BREVATOME 25, rue de Ponthieu**
**F-75008 Paris (FR)**

(56) Documents cités:
**US - A - 3 923 038**
**US - A - 4 000 776**
**US - A - 4 033 325**
**US - A - 4 048 981**

Courier Press, Leamington Spa, England.

Capteur solaire, du genre caloduc, protégé contre les surpressions.

La présente invention a pour objet un capteur solaire du genre caloduc, autoprotégé contre les surpressions internes. Elle trouve une application dans les installations utilisant des capteurs solaires.

On connait les capteurs solaires de type classique. Ils comportent un boîtier renfermant un absorbeur de l'énergie solaire solidaire d'un réseau d'extraction de chaleur, un isolant interposé entre l'absorbeur et le boîtier afin de diminuer les pertes thermiques par conduction, un ou plusieurs vitrages destinés à diminuer les pertes thermiques par convection et rayonnement et les dispositifs nécessaires pour le montage et l'étanchéité de l'ensemble.

On connait déjà le tube de chaleur, dit caloduc. Il se présente sous la forme d'un récipient de forme généralement allongée, contenant un fluide vaporisable dans les conditions normales d'utilisation dudit caloduc. Il permet d'effectuer un transfert de chaleur par vaporisation à l'une des extrémités, dite extrémité chaude, et par condensation à l'autre extrémité, dite extrémité froide, d'un fluide caloporteur en phase vapeur, que nous appellerons ci-après fluide caloduc. Généralement, le caloduc est tapissé intérieurement d'un réseau capillaire et incliné de telle manière que l'extrémité froide soit surélevée par rapport à l'extrémité chaude; ceci permet d'assurer le retour du fluide caloduc à la fois par gravité et par capillarité après condensation de celui-ci.

Lorsqu'un absorbeur solaire est accolé à un caloduc, on se trouve en présence d'un absorbeur caloduc de type classique déjà connu. On en trouvera une description, par exemple, dans le brevet français n° FR—A—2 255 566 déposé le 18 décembre 1974 pour "Dispositif pour la transformation énergétique de l'énergie absorbée ou émise", au nom de DORNIER SYSTEM GMBH.

Dans ce genre d'appareil, le caloduc fonctionne comme un caloduc simple du type de celui qui a été précédemment décrit. La chaleur apportée à l'extrémité chaude provient ici de la plaque accolée au caloduc constituant un absorbeur de l'énergie solaire.

Les parois internes du caloduc sont revêtues d'un réseau capillaire qui permet au fluide caloduc de remonter vers la plaque collectrice de la chaleur. Ce réseau capillaire peut être réalisé de différentes façons. Il peut être constitué, par exemple, par une mèche métallique fine. La chaleur transmise par la plaque supérieure vaporise alors le fluide caloduc.

La chaleur apportée lors de la condensation du fluide caloduc est récupérée par un dispositif d'extraction des calories, situé de la même manière que pour le caloduc précédemment décrit, à l'extrémité haute du capteur caloduc, qui lui aussi est incliné de quelques degrés par rapport à l'horizontale, de manière à assurer le retour du fluide caloduc par gravité. Ce dispositif d'extraction des calories qui peut être de différents types, utilise un fluide qui sera appelé par la suite fluide primaire, circulant dans une canalisation dite circuit primaire.

Ce type de capteur permet de désolidariser la fonction d'absorption de la fonction de transport par le fluide d'extraction de chaleur.

Cependant, un incident courant sur ce genre d'installation est l'arrêt de l'évacuation des calories par le fluide primaire, arrêt provenant par exemple d'une panne de la pompe assurant la circulation de ce fluide ou d'un défaut mécanique. Il peut en résulter certaines conséquences dommageables, tant pour le capteur lui-même que pour le circuit primaire. D'une part, le caloduc continue de transmettre des calories au fluide primaire alors que celui-ci ne circule plus, d'où une élévation de sa température pouvant conduire à l'ébullition du fluide primaire et éventuellement à une rupture des canalisations dans lesquelles il circule; d'autre part, la pression à l'intérieur du caloduc, égale à la tension de vapeur du liquide caloporteur, croît par suite de l'augmentation de la température, ce qui peut entraîner des dommages pour le capteur lui-même.

On connaît par le brevet des Etats-Unis d'Amérique 3 519 067, une résistance thermique variable. Cette résistance permet d'effectuer un transfert de chaleur d'une source chaude à une source froide en utilisant l'effet caloduc. Elle comporte une enceinte définissant une chambre dont une première paroi est située à proximité de la source chaude et dont une deuxième paroi est située à proximité de la source froide. Les première et seconde parois sont revêtues d'un réseau capillaire. Un fluide caloporteur présent à l'intérieur de l'enceinte se vaporise au contact de la première paroi et se condense au contact de la seconde paroi, effectuant ainsi un transfert de chaleur. Le retour du fluide caloporteur de la seconde à la première parois est assuré par un réseau capillaire s'étendant entre ces dernières. Le dispositif comporte des moyens pour restreindre le retour du fluide caloporteur, une interruption complète étant possible. Ces moyens peuvent être constitués par des éléments de type bilame qui s'écartent du second réseau capillaire en dessous d'une température prédéterminée, ou encore par des soufflets remplis d'un liquide dilatable. Au-dessus d'une certaine température, l'extension du liquide contenu dans le soufflet établit le contact entre les deux réseaux capillaires.

On peut ainsi contrôler le transfert de chaleur de la première à la seconde parois et même l'interrompre complètement lorsque le réseau capillaire est interrompu. Cependant, dans ce dispositif, les réseaux capillaires s'écartent en-dessous d'une température prédéterminée, alors que pour obtenir un effet de protection, c'est un fonctionnement inverse qui est nécessaire.

L'invention concerne un capteur solaire dans lequel l'absorbeur est de type caloduc et comporte un réseau capillaire formé en deux parties et des moyens originaux pour séparer ces deux parties en cas de surpression apparaissant dans l'absorbeur.

Cet absorbeur caloduc mis en place dans un capteur solaire de type caloduc est constitué par une boîte étanche à l'intérieur de laquelle se trouve un fluide vaporisable dans les conditions normales de fonctionnement dudit absorbeur. Cette boîte se compose:

— d'une plaque supérieure plane qui reçoit la chaleur sur sa face supérieure. La face inférieure de cette plaque est revêtue d'un réseau capillaire;

— d'un fond pouvant être de différents types, dont le rôle est double. D'une part, il forme une structure destinée à empêcher l'écrasement de la boîte pendant la marche normale de l'absorbeur. En effet, pendant celle-ci, la température du fluide caloduc étant inférieure à la température d'ébullition, la pression à l'intérieur de l'absorbeur est inférieure à la pression atmosphérique. D'autre part, le fond est revêtu d'un réseau capillaire qui, lors du fonctionnement normal, est maintenu en contact avec le réseau capillaire accolé à la plaque supérieure par l'effet des forces de pression atmosphérique. On peut également, dans une variante d'exécution, réaliser cette structure par l'adjonction à un fond plat d'entretoises elles-mêmes revêtues d'un réseau capillaire. Ces entretoises sont solidaires du fond, ou bien maintenues latéralement de façon à ne pas basculer lors de l'écartement du couvercle en cas de surchauffe et de surpression interne;

— de faces latérales réalisées de manière à présenter une résistance thermique suffisamment élevée pour assurer une conduction limitée de la chaleur de la face supérieure vers le fond de la boîte, ainsi qu'on le verra par la suite. Aux extrémités latérales est prévu un gaufrage qui a deux rôles. D'une part, assurer l'étanchéité de la boîte et, d'autre part, avoir une résistance thermique suffisante.

Le capteur caloduc comprenant l'absorbeur défini ci-dessus est incliné de quelques degrés par rapport à l'horizontale et c'est à l'extrémité haute que se trouve le dispositif d'extraction des calories apportées par la condensation du liquide caloduc. Ceci permet d'assurer le retour, par gravité, du fluide caloduc, une fois celui-ci condensé.

Le dispositif d'extraction des calories peut être par exemple de différents types:

— soit du type épingle. Un conduit parcouru par le fluide primaire entre dans la boîte et en ressort. Il est nécessaire que cette épingle soit bien isolée de la boîte et soit dans une zone où par construction, il n'y a pas de cannelures constituant la structure destinée à empêcher l'écrasement de la boîte.

— soit du type éperon, le caloduc étant terminé par un éperon creux, soudé sur une face du caloduc et plongeant dans la canalisation primaire.

La plaque supérieure de la boîte est suffisamment souple pour qu'une augmentation de la pression à l'intérieur de l'absorbeur entraîne une séparation de l'ordre de quelques millimètres des deux réseaux capillaires, de telle manière que le liquide caloduc mouillant le réseau inférieur ne puisse venir mouiller le réseau capillaire accolé à la plaque supérieure.

L'absorbeur caloduc est rempli d'un liquide dont la température d'ébullition $Tc$ est inférieure ou égale à la température d'ébullition $Tp$ du liquide primaire.

L'absorbeur caloduc est monté comme un absorbeur solaire classique à l'intérieur d'un boîtier dont le fond est revêtu d'un matelas isolant destiné à éviter les pertes de chaleur, et dont la partie supérieure comporte un ou plusieurs vitrages.

En fonctionnement normal, l'ensemble se comporte comme un absorbeur caloduc de type classique, c'est-à-dire que la chaleur captée par la plaque supérieure est utilisée pour vaporiser le liquide mouillant le réseau capillaire qui lui est accolé. Cette vapeur se condense à l'extrémité haute du capteur, où elle abandonne au fluide primaire la chaleur dégagée lors de la condensation. Le liquide résultant de la condensation redescend par gravité et grâce au réseau capillaire situé sur le fond de la boîte, vient réalimenter en liquide le réseau accolé à la plaque supérieure. Ce fonctionnement normal se poursuit aussi longtemps que la température du fluide primaire est inférieure à $Tc$, température d'ébullition du fluide caloduc.

Supposons qu'un arrêt de la circulation du fluide primaire se produise. Pendant un certain temps, le fonctionnement du caloduc se poursuit. Mais comme le fluide principal ne circule plus, sa température dans la zone d'évacuation des calories s'élève, et finit par dépasser $Tc$, température normale d'ébullition du fluide caloduc. Il y a alors ébullition du liquide, d'où une augmentation de la pression qui règne dans l'enceinte du caloduc. Lorsque cette pression dépasse la pression atmosphérique, la plaque supérieure de la boîte, qui a été conçue de manière à être suffisamment souple, se déforme de façon à ce que les réseaux capillaires supérieur et inférieur se séparent. La distance entre ces deux réseaux doit être suffisante pour qu'il n'y ait plus alors mouillage du réseau capillaire supérieur. Celui-ci n'étant plus alimenté en fluide s'assèche. Le transfert des calories de la plaque supérieure vers le fond de l'absorbeur ne se fait plus essentiellement que par conduction à travers les faces latérales, ce qui entraîne une croissance de la température jusqu'à une valeur limite $T_1$. Le liquide caloduc, qui, lors du fonctionnement normal, était vaporisé au contact de la plaque supérieure, ne bout plus. En effet, les faces latérales sont dimensionnées (épaisseur, hauteur) de façon à présenter une résistance thermique suffisante pour que le fond de l'absorbeur ne puisse atteindre Tc, compte tenu des pertes thermiques par l'isolant garnissant le fond du boîtier du capteur. Le fonctionnement caloduc est de ce fait interrompu. Il en résulte une diminution considérable de la transmission de chaleur vers le circuit primaire, et par conséquent, des risques de surpression dans ce circuit. D'autre part, la pression interne de l'absorbeur s'élève dans des proportions bien moindres que si la vaporisation du fluide caloduc s'était poursuivie.

L'invention réalisé donc une protection, aussi bien de l'absorbeur caloduc que du circuit primaire.

Bien entendu, le phénomène est réversible, et dès que l'extraction des calories par le circuit primaire reprend, la pression dans l'absorbeur baisse, les deux réseaux capillaires reprennent contact sous l'effet des forces de pression atmosphérique et le fonctionnement normal du caloduc, tel qu'il a été décrit précédemment, recommence.

De toute façon, l'invention sera mieux comprise à la lecture de la description qui suit d'exemples de réalisation de l'invention, donnés à titre purement indicatif. La description se réfère aux figures annexées sur lesquelles on a représenté:

— sur la fig. 1, un absorbeur caloduc de type classique connu;

— sur la fig. 2, une vue en coupe du capteur faisant l'objet de la présente invention;

— sur la fig. 3, différents types de réalisation du dispositif d'extraction des calories;

— sur la fig. 4, une variante de réalisation du fond de l'absorbeur;

— sur la fig. 5, la caractéristique de puissance extraite du capteur en fonction de la température.

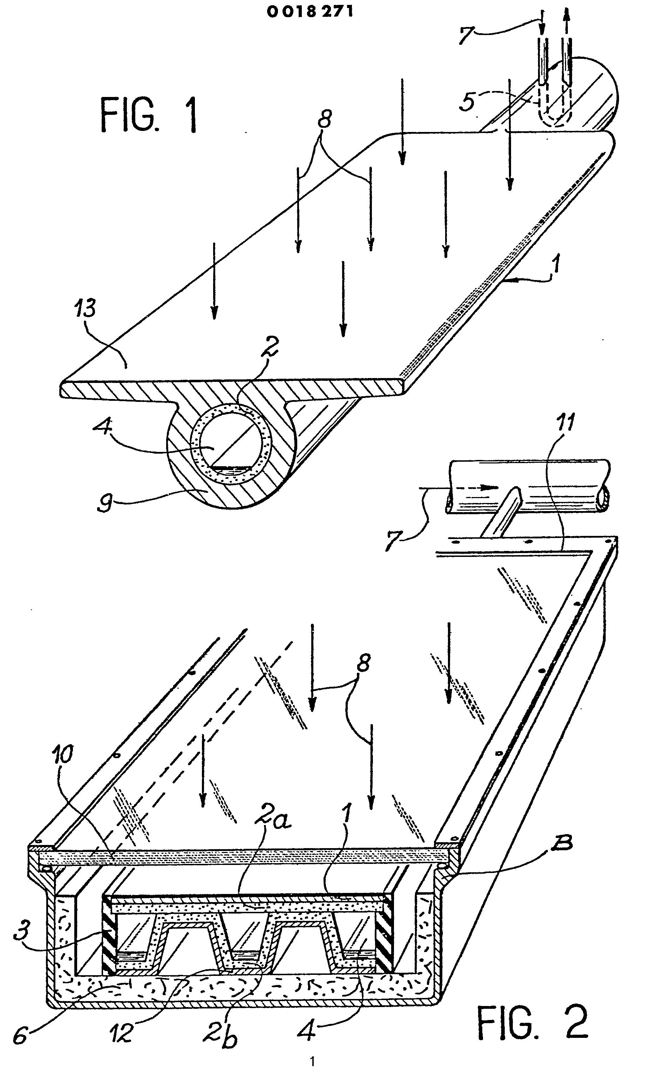

La fig. 1 représente un absorbeur caloduc d'un type classique connu avec une surface 1 collectrice de l'énergie solaire 8, à laquelle est accolé un tube conducteur de chaleur à effet caloduc 9, revêtu intérieurement d'un réseau capillaire 2. Le volume interne 4 de ce tube contient une faible quantité d'un fluide qui remonte par effet capillaire vers la plaque collectrice de chaleur 1, où il se vaporise. La vapeur produite se condense au point froid 5, où la chaleur est évacuée par le liquide primaire 7. Le fluide condensé retourne ensuite vers l'extrémité dite chaude 13, par gravité et par capillarité.

L'arrêt pour une cause quelconque de la circulation du liquide primaire 7, chargé d'extraire les calories du fluide caloduc peut conduire à un incident dont les conséquences ont été exposées plus haut, à savoir une élévation de la température du fluide primaire 7 dans la zone 5, et une augmentation de la pression dans le volume 4 du caloduc, pouvant conduire à la destruction de celui-ci.

Le capteur caloduc faisant l'objet de la présente invention est représenté par la fig. 2.

En fonctionnement normal, la plaque plane 1 collectrice de l'énergie solaire 8 vaporise le fluide caloduc mouillant le réseau capillaire 2a accolé à la plaque supérieure 1. Après avoir cédé la chaleur dégagée lors de sa condensation au fluide primaire 7 dont les canalisations sont situées du côté de l'extrémité haute 11 du capteur, qui est incliné de quelques degrés par rapport à l'horizontale de façon à permettre le retour par gravité du fluide condensé, le fluide remonte le long de la structure formant renfort mécanique 12 à l'aide du réseau capillaire 2b. En fonctionnement normal, les réseaux capillaires 2a et 2b étant maintenus au contact l'un de l'autre par l'effet des forces de pression atmosphérique, le liquide caloduc mouillant le réseau capillaire 2b réalimente alors le réseau 2a accolé à la plaque supérieure 1.

Lorsque par suite d'un arrêt de la circulation du liquide primaire 7 chargé d'extraire les calories, la température de ce dernier liquide devient supérieure à Tc, il y a ébullition du liquide remplissant le caloduc et augmentation de la pression dans le volume 4 du caloduc. Cette surpression entraîne le décollement de la face supérieure 1 par rapport au fond 12 du caloduc. Les deux réseaux capillaires 2a et 2b n'étant plus en contact, le réseau supérieur 2a s'assèche et le transfert de calories de la face supérieure 1 vers le fond 12 du caloduc se fait essentiellement par les faces latérales 3. Les parois latérales 3 sont réalisées de manière à présenter une résistance thermique suffisante pour que, dans ce cas, la conduction de chaleur de la plaque supérieure plane 1 vers le fond du capteur caloduc 12 soit suffisamment réduite pour que la température de ce dernier ne dépasse pas Tc, température d'ébullition du liquide caloduc, compte tenu des pertes par l'isolant 6 garnissant le fond du boîtier B. De ce fait, le fonctionnement caloduc est interrompu, ce qui réalise une protection du capteur ainsi que du circuit primaire d'évacuation des calories. La température de la plaque supérieure croît alors jusqu'à une valeur limite $T_1$. Les parois latérales 3 peuvent être réalisées en acier inoxydable ou en plastique tenant à cette température limite. Le phénomène est réversible et dès que l'extraction des calories par le circuit primaire reprend, la pression dans le volume 4 baisse, les deux réseaux capillaires 2a et 2b reprennent contact sous l'effet des forces de pression et l'effet caloduc recommence. Le boîtier 5 comporte un ou plusieurs vitrages 10 destinés à diminuer les pertes thermiques par convection et rayonnement.

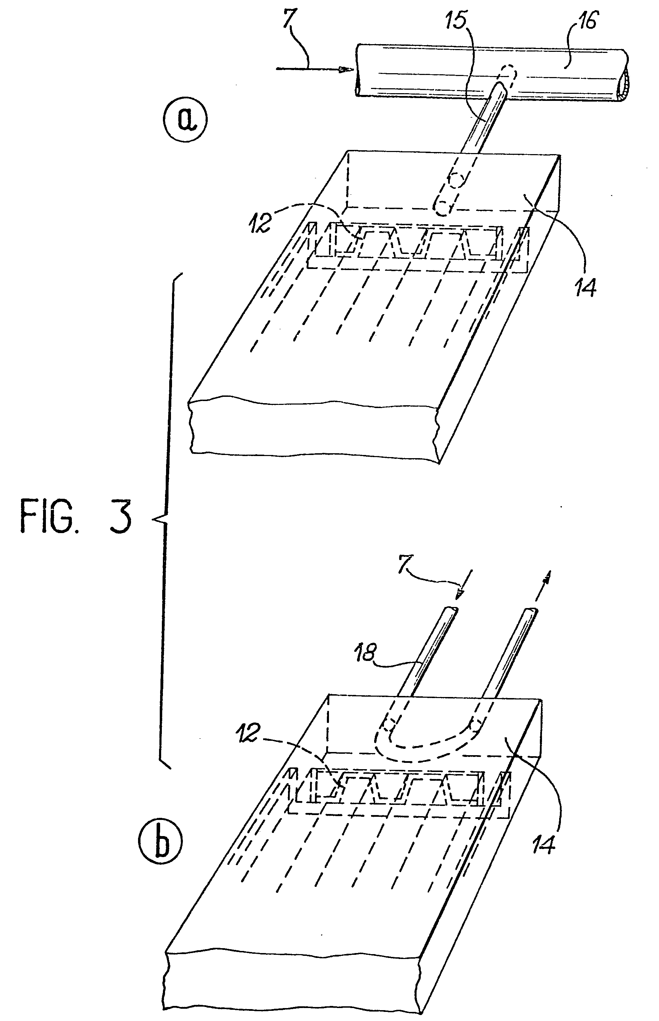

La fig. 3 représente différentes variantes de réalisation du dispositif d'extraction des calories.

La fig. 3a représente un dispositif du type éperon. Le capteur caloduc 14 est terminé par un éperon creux 15 soudé sur la face du caloduc et plongeant dans la canalisation principale 16 dans laquelle circule le liquide primaire 7.

La fig. 3b représente un dispositif d'extraction des calories du type épingle. Un conduit 18 parcouru par le liquide primaire 7 entre dans la boîte 14 et en ressort. Il est nécessaire que cette épingle 18 soit bien isolée de la boîte et soit dans une zone où par construction, on a interrompu les cannelures du fond 12.

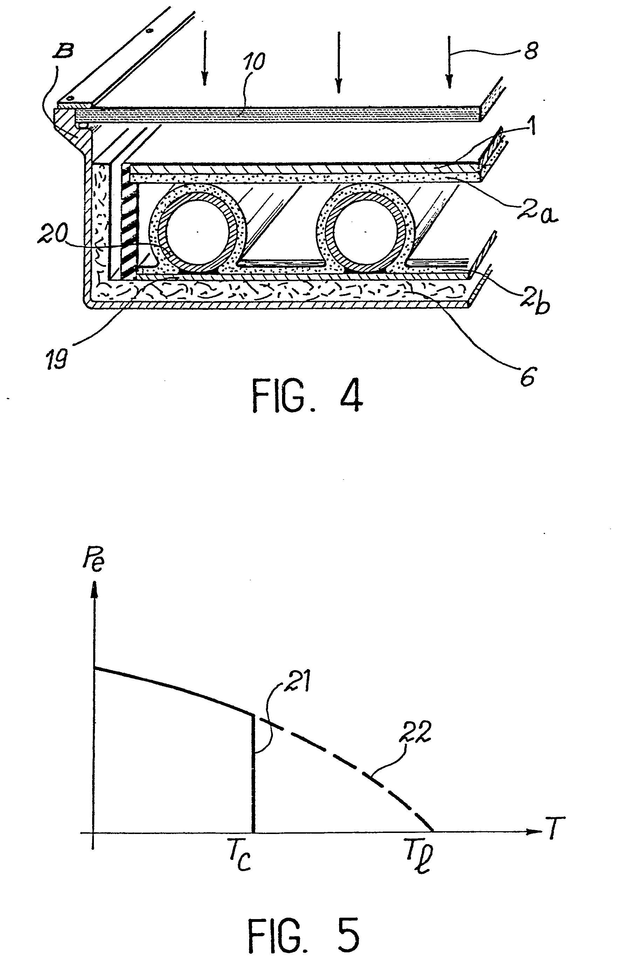

La fig. 4 représente une variante de réalisation du fond de la boîte. Celui-ci est constitué par une plaque plane 19 sur laquelle on a fixé des tubes 20 qui sont revêtus d'un réseau capillaire 2b, lequel réseau capillaire est en contact lors du fonctionnement normal du capteur caloduc avec le réseau 2a accolé à la plaque supérieure plane 1 qui collecte la chaleur 8. L'espacement des entretoises 20 est défini à partir de considérations mécaniques et des possibilités de mouillage dudit tissu 2b par le fluide caloduc.

La fig. 5 représente la caractéristique de puissance extraite (Pe) en fonction de la température (T) du liquide caloduc, avec le capteur solaire décrit dans la présente invention, et avec un capteur solaire caloduc de type classique. La courbe 21 représente la caractéristique du capteur caloduc faisant l'objet de l'invention, alors que la courbe pointillée 22 représente celle d'un capteur caloduc de type classique connu. On remarque que dans le premier cas, lorsque la température à l'intérieur du caloduc atteint Tc, la puissance extraite chute brutalement, alors qu'avec un capteur caloduc de type classique connu, elle diminue lentement, jusqu'à ce que la température à l'intérieur du caloduc atteigne $T_1$, température limite de la plaque collectrice de la chaleur.

## Revendications

1. Capteur solaire du genre caloduc, comprenant de façon connue un boîtier renfermant un absorbeur caloduc de l'énergie solaire, un isolant (6) interposé entre l'absorbeur et le fond du boîtier, au moins un vitrage (10) sur ledit boîtier ainsi que les dispositifs nécessaires pour le montage et l'étanchéité de l'ensemble, ledit absorbeur caloduc étant constitué par une boîte étanche formée par une plaque supérieure (1) collectrice de la chaleur (8), un fond (12) et des parois latérales (3), un réseau capillaire (2a, 2b) tapissant l'intérieur de ladite boîte et un fluide caloporteur mouillant ledit réseau capillaire (2a, 2b), caractérisé en ce que le fond (12) comporte une structure faisant saillie, destinée à empêcher l'écrasement de la boîte sous l'effet de la pression atmosphérique, le réseau capillaire (2a, 2b) étant constitué par une première partie (2a) appliquée sur la plaque supérieure (1) et une seconde partie (2b) appliquée sur le fond (12) et la structure faisant saillie, et en ce que la plaque supérieure (1) est déformable sous l'effet d'une surpression apparaissant dans la boîte, les première et deuxième parties du réseau capillaire ne présentant aucun point de contact lorsque ladite plaque supérieure (1) est déformée, la plaque supérieure reposant sur le réseau capillaire de ladite structure destinée à empêcher l'écrasement de la boîte, lorsque la plaque supérieure n'est pas déformée.

2. Capteur solaire du genre caloduc, selon la revendication 1, caractérisé en ce que les première et deuxième parties du réseau capillaire (2a, 2b) ne présentant aucun point de contact par suite de la déformation de la plaque supérieure (1), ladite plaque supérieure (1) et le fond (12) ne sont reliés thermiquement que par les parois latérales (3) dimensionnées en fonction de l'isolation de l'absorbeur.

3. Capteur solaire du genre caloduc selon la revendication 2, caractérisé en ce que ses parois latérales (3) sont réalisées en un matériau présentant une bonne résistance mécanique et une faible conductivité thermique.

4. Capteur solaire du genre caloduc selon la revendication 3, caractérisé en ce que les parois (3) de l'absorbeur sont réalisées en un matériau pouvant supporter la température limite maximale.

5. Capteur solaire du genre caloduc selon l'une des revendications 1 à 4, caractérisé en ce que la température d'ébullition du fluide caloporteur qu'il contient est inférieure à celle d'un liquide primaire chargé d'évacuer la chaleur apportée par la condensation dudit fluide caloduc.

6. Capteur solaire du genre caloduc selon l'une des revendications 1 à 5, caractérisé en ce que le fond (12) de la boîte est constitué par des cannelures formant renfort mécanique de manière à empêcher l'écrasement de la boîte lorsque la pression qui y règne est inférieure à la pression atmosphérique.

7. Capteur solaire du genre caloduc selon l'une des revendications 1 à 5, caractérisé en ce que le fond (12) de la boîte est constitué par un fond plat (19) sur lequel on a fixé un réseau d'entretoises (20) de manière à empêcher l'écrasement de la boîte lorsque la pression qui y règne est inférieure à la pression atmosphérique.

## Patentansprüche

1. Solarkollektor des Verdampfungstyps, mit einem in bekannter Weise ausgeführten Gehäuse, welches einen Sonnenenergie-Verdampfungsabsorber enthält, einer zwischen dem Absorber und dem Boden des Gehäuses angeordneten Isolierung (6), wenigstens einer das Gehäuse abdeckenden Glasscheibe (10) und den notwendigen Einrichtungen für die Montage und die Abdichtung der Gesamtanordnung, wobei der Verdampfungsabsorber aus einem abgedichteten Behältnis gebildet ist, welches aus einer Wärme (8) absorbierenden oberen Platte (1), einem Boden (12) und Seitenwänden (3) gebildet ist, einem das Innere des Behältnisses auskleidenden Kapillarnetz (2a, 2b) und einer das Kapillarnetz (2a, 2b) benetzenden Wärmeträgerflüssigkeit, dadurch gekennzeichnet, daß der Boden (12) eine Anordnung von Erhebungen aufweist, welche ein Zusammendrücken des Behältnisses unter Einwirkung des atmosphärischen Drucks verhindern sollen, daß das Kapillarnetz (2a, 2b) aus einem an der oberen Platte (1) angebrachten ersten Teil (2a) und einem am Boden (12) und an dessen Erhebungen angebrachten zweiten Teil (2b) besteht und daß die obere Platte (1) unter Einwirkung eines im Behältnis auftretenden Überdrucks verformbar ist, wobei das erste und das zweite Teil des Kapillarnetzes im verformten Zustand der oberen Platte keinerlei Berührungspunkte miteinander aufweisen und die obere Platte im nicht verformten Zustand auf dem Kapillarnetz der das Zusammendrücken des Behältnisses verhindernden Erhebungen aufliegt.

2. Solarkollektor des Verdampfungstyps nach Anspruch 1, dadurch gekennzeichnet, daß das erste und das zweite Teil des Kapillarnetzes (2a, 2b) in der Folge der Verformung der oberen Platte (1) keinerlei Berührungspunkte aufweisen und daß die obere Platte (1) und der Boden (12) wärmeleitend allein über die Seitenwände (3) miteinander verbunden sind, welche in Abhängigkeit von der Isolierung des Absorbers dimensioniert sind.

3. Solarkollektor des Verdampfungstyps nach Anspruch 2, dadurch gekennzeichnet, daß die Seitenwände (3) aus einem Material gefertigt sind, welches eine gute mechanische Widerstandsfähigkeit und eine geringe Wärmeleitfähigkeit aufweist.

4. Solarkollektor des Verdampfungstyps nach Anspruch 3, dadurch gekennzeichnet, daß die Wände (3) des Absorbers aus einem Material gefertigt sind, welches der maximalen Grenztemperatur zu widerstehen vermag.

5. Solarkollektor des Verdampfungstyps nach wenigstens einem der Ansprüche 1 bis 4, dadurch gekennzeichnet, daß die Siedetemperatur der darin enthaltenen Wärmeträgerflüssigkeit niedriger ist als diejenige einer Primärflüssigkeit für die Abfuhr der durch Kondensation der Wärmeträgerflüssigkeit gewonnenen Wärme.

6. Solarkollektor des Verdampfungstyps nach einem der Ansprüche 1 bis 5, dadurch gekennzeichnet, daß der Boden (12) des Behältnisses aus Hohlrinnen gebildet ist, welche eine mechanische Versteifung bilden, um das Zusammendrücken des Behältnisses zu verhindern, sofern der darin herrschende Druck niedriger ist als der atmosphärische Druck.

7. Solarkollektor des Verdampfungstyps nach einem der Ansprüche 1 bis 5, dadurch gekennzeichnet, daß der Boden (12) des Behältnisses als flacher Boden (19) ausgebildet ist, auf welchem ein Netz von Abstandhaltern (20) befestigt ist, welche ein Zusammendrücken des Behältnisses verhindern sollen, sofern der darin herrschende Druck niedriger ist als der atmosphärische Druck.

**Claims**

1. Solar collector of the heat pipe type comprising, in known manner, a casing enclosing a heat pipe solar heat absorber, insulation (6) provided between the absorber and the bottom of the casing, at least one glazed panel (10) on said casing as well as equipment necessary for mounting and ensuring fluid-tightness of the assembly, said heat pipe absorber being constituted by a closed box formed by an upper plate (1) for collecting heat (8), a bottom (12), and said walls (3), a capillary network (2a, 2b) lining the interior of said box, and a heat transfer fluid moistening said capillary network (2a, 2b), characterized in that the bottom (12) has a structure providing resilience whereby to prevent collapse of the box under the effect of atmospheric pressure, the capillary network (2a, 2b) being constituted by a first part (2a) applied to the upper plate (1) and a second part (2b) applied to the bottom (12) and to the structure providing resilience, and in that the upper plate (1) is deformable under the effect of an overpressure occurring in the box, the first and second parts of the capillary network not being in contact when said upper plate (1) is deformed, and the upper plate resting on the capillary network of said structure provided to prevent collapse of the box, when the upper plate is not deformed.

2. Solar collector of the heat pipe type according to Claim 1 characterized in that when the first and second parts of the capillary network (2a, 2b) are not in contact because of deformation of the upper plate (1), said upper plate (1) and the bottom (12) are linked thermally only by the side walls, dimensioned as a function of the insulation of the absorber.

3. Solar collector of the heat pipe type according to Claim 2, characterized in that the side walls (3) are made from a material having good mechanical strength and low thermal conductivity.

4. Solar collector of the heat pipe type according to Claim 3 characterized in that the walls (3) of the absorber are made from material able to support the maximum temperature limit.

5. Solar collector of the heat pipe type according to any one of Claims 1 to 4 characterized in that the boiling temperature of the heat transfer fluid contained therein is less than that of a primary liquid provided to remove the heat released by condensation of the fluid of the heat pipe.

6. Solar collector of the heat pipe type according to any one of Claims 1 to 5 characterized in that the bottom (12) of the box comprises corrugations providing mechanical reinforcement to prevent collapse of the box when its internal pressure is less than atmospheric pressure.

7. Solar collector of the heat pipe type according to any one of Claims 1 to 5 characterized in that the bottom (12) of the box comprises a flat base (19), on which is fixed a system of struts (20) whereby to prevent collapse of the box when its internal pressure is less than atmospheric pressure.

0018271

FIG. 1

FIG. 2

1

0018271

FIG. 3

(a)

7  15  16

12

14

(b)

7

18

12

14

2

**0018271**

FIG. 4

FIG. 5